# EUROPÄISCHE PATENTSCHRIFT

(11) **EP 2 554 638 B1**
(45) Veröffentlichungstag und Bekanntmachung des Hinweises auf die Patenterteilung: **08.05.2019**
(21) Anmeldenummer: 11007924.1
(22) Anmeldetag: 29.09.2011
(51) Int. Cl.: C10L 5/46, C10L 5/48

(54) **VERFAHREN UND VORRICHTUNG ZUR MECHANISCHEN ODER MECHANISCH-BIOLOGISCHEN BEHANDLUNG VON ABFÄLLEN**
METHOD AND DEVICE FOR MECHANICAL OR MECHANICAL-BIOLOGICAL TREATMENT OF WASTE
PROCÉDÉ ET DISPOSITIF DE TRAITEMENT MÉCANIQUE OU MÉCANIQUE-BIOLOGIQUE DES DÉCHETS

(30) Priorität: 01.08.2011 EP 11176112
(43) Veröffentlichungstag der Anmeldung: 06.02.2013
(73) Patentinhaber: Zweckverband Abfallbehandlung Kahlenberg, 77975 Ringsheim (DE)
(72) Erfinder: Gibis, Georg, 77975 Ringsheim (DE); Person, Georg, Dr., 77975 Ringsheim (DE)
(74) Vertreter: Hörschler, Wolfram Johannes

(56) Entgegenhaltungen:
- EP-A2- 1 916 288
- WO-A1-2009/043322
- DE-A1- 19 602 489
- US-A1- 2008 022 587
- US-A1- 2010 096 336
- US-A1- 2010 184 176

## Beschreibung

Die Erfindung bezieht sich auf ein Verfahren zur Behandlung von Abfällen in einer mechanischen oder mechanisch-biologischen Abfallbehandlungsanlage, sowie auf eine Vorrichtung zur mechanischen oder mechanisch-biologischen Behandlung von Abfällen.

### Stand der Technik

Abfälle, insbesondere Siedlungsabfälle und Hausabfälle, dürfen in Deutschland seit 2005 nur dann auf einer Deponie abgelagert werden, wenn sie vorbehandelt sind. Die Zuordnungswerte, die die vorbehandelten Abfälle einzuhalten haben, sind in der Deponieverordnung, (DepV), festgeschrieben. Im Wesentlichen müssen in den betrachteten Abfällen der biogene Anteil und die brennbaren Bestandteile deutlich reduziert werden, damit die Zuordnungswerte zur Deponierung erreicht werden können. Die Reduktion dieser Bestandteile in zu deponierenden Abfällen wie auch die Minimierung der zu deponierenden Abfälle durch Recycling und Verwertung gewinnt auch in EU-Raum aufgrund EU-weiter Regelungen immer mehr an Bedeutung.

Werden Abfällen in einer klassischen Müllverbrennungsanlage thermisch behandelt, können die Reste aus der Verbrennung die Zuordnungswerte zur DepV sicher einhalten. Alternativ können Abfälle mechanisch-biologisch behandelt werden. Vor dem Hintergrund des Klimaschutzes und der Schonung endlicher Ressourcen werden auch bei dieser Technik die Rückgewinnung wiederverwertbarer Fraktionen (Metalle, Kunststoffe) und die Umwandlung in anderweitig nutzbare Stoffströme (z. B. qualitätsgesicherte Ersatzbrennstoffe) immer wichtiger. Für die Ablagerung von nicht weiter nutzbaren Resten aus der mechanisch-biologischen Behandlung von Siedlungsabfällen gelten in der DepV eigene Zuordnungswerte.

In mechanisch-biologischen Abfallbehandlungsanlagen werden Abfälle, insbesondere Hausabfälle mit organischen Anteilen, durch Abtrennen gröberer Bestandteile und Kompostierung oder Vergärung der verbleibenden organikreicheren Fraktion behandelt. Die abgetrennten gröberen Bestandteile werden in der Regel als Ersatzbrennstoffe verwertet, der übrige Anteil wird in vielen Fällen einer Endrotte zugeführt und anschließend deponiert. Die abzubauende Biomasse wird somit nicht weiter verwertet und der Flächen- und Zeitverbrauch bei der Endrotte solcher Abfälle ist vergleichsweise groß.

Aus der EP 0 937 504 A2 ist ein Verfahren zur Verwertung von Resthausabfällen bekannt, bei dem ein großer Teil der enthaltenen organischen Substanzen energetisch verwertet wird. In dem beschriebenen Verfahren wird in einem ersten Schritt eine Aufteilung in Grob- und Feinstoffe durchgeführt, wobei die Grobstoffe in Stör- und Wertstoffe aufgeteilt werden. Im nächsten Schritt werden die Feinstoffe einer biologischen Behandlung unterzogen. Das dabei ausgepresste Wasser wird zur Produktion von Biogas eingesetzt. Die erhaltenen Feststoffe werden nach Abschluss einer biologischen Trocknung und Abtrennung von nicht brennbaren und inerten Fraktionen als Ersatzbrennstoff verwendet.

Um eine gleichbleibende Qualität des gewonnenen Brennstoffs garantieren zu können, ist es vorteilhaft den biologisch behandelten Abfall vor dem Abpressen der Flüssigkeit bei einen definierten Flüssigkeitsgehalt zu homogenisieren.

In WO 2009/043322 wird vorgeschlagen, Abfälle nach Vorbehandlung in einer biologischen Stufe in einem Mischbehälter mit einem Rührwerk zu homogenisieren. Dabei wird die Konsistenz des Abfalls so eingestellt, dass ein anschließendes Abpressen der Flüssigkeit und eine biologische Trocknung des Feststoffes möglich sind.

Aus der WO 97/27158 ist ein Verfahren und eine Vorrichtung zur biologischen Behandlung von organischen Abfällen bekannt. Bei dem Verfahren werden die Abfälle durchmischt und intensiv bewässert, um organische Substanzen zu lösen. Während der Behandlung wird Frischluft eingeblasen, um eine aerobe Hydrolyse des Abfalls zu unterstützen.

Nachteilig bei diesem Verfahren ist ein vergleichsweise großer Wassereinsatz, wobei die Wasserabläufe leicht durch eindringenden Abfall verstopfen, was einen hohen technischen Aufwand zur Reinigung und Freihaltung der Abläufe erfordert. Durch das starke Herauslösen der organischen Substanzen besitzt ein aus den Abfällen hergestellter Ersatzbrennstoff einen geringeren biogenen Brennstoffanteil. Es hat sich außerdem gezeigt, dass durch eine intensive Belüftung des Abfalls eine aerobe Hydrolyse nicht wesentlich begünstigt wird und für den Prozess nicht essentiell ist.

US 2010/0184176 A1 bezieht sich auf eine Vorrichtung zur hydrothermischen Zersetzung von Biomasse. Über eine Zuführvorrichtung wird Biomasse unter erhöhtem Druck dem Hauptbehälter der Vorrichtung zugeführt. Der Hauptbehälter der Vorrichtung wird im Gegenstrom zu der Biomasse von heißem unter Druck stehendem Wasser durchströmt. Im Inneren des Hauptbehälters befindet sich eine fest angeordnete Rühreinheit, mit der die Biomasse durchmischt wird. Durch das Rühren wird das unter Druck stehende Wasser mit der Biomasse vermischt. Die Biomasse wird von dem heißen Wasser zersetzt und am anderen Ende des Hauptbehälters entnommen. Zur Aufrechterhaltung des Druckes im Inneren des Hauptbehälters sind eine Zugabestelle und an der Entnahmestelle Schleusenventile vorgesehen.

DE 196 02 489 A1 bezieht sich auf ein Verfahren zur biologischen Behandlung von organischen Materialien und einer Vorrichtung zur Durchführung dieses Verfahrens. Es wird ein Verfahren zur biologischen Behandlung von organischen Abfällen aus dem Haushalt, dem lebensmittelverarbeitenden Gewerbe oder der Landwirtschaft vorgeschlagen, wobei in einem Feststoffreaktor das Material mittels einer Auswaschflüssigkeit behandelt wird, so dass eine Auswaschung löslicher, organischer oder anorganischer Substanzen sowie gegebenenfalls enthaltender wasserlöslicher Fettsäuren aus dem zu behandelnden Material erfolgt. Die Auswaschflüssigkeit wird im unteren Teil eines Reaktors entnommen. Diese wird kontinuierlich oder diskontinuierlich mit Material beschickt. Die Beschickung erfolgt am einen Ende und die Entnahme am anderen Ende des Reaktors. Der Reaktor umfasst ein kombiniertes Rühr- und/oder Umwälz- und/oder Transportwerk. Dieses dient einer Durchmischung sowie einem Transport des Materials sowie einer Vermeidung der Störung von Kurzschlussstromkanälen innerhalb des Materials. Es erfolgt ein aerober Abbau organischer Substanzen unter Zufuhr von Frischluft. Die Frischluft durchströmt das Material im Gegenstrom zur Richtung der Auswaschflüssigkeit gleichmäßig. Das Material erwärmt sich auf Prozesstemperatur, wobei während des aeroben Abbaus des Materials eine kontinuierliche oder diskontinuierliche Auswaschung mittels der Auswaschflüssigkeit erfolgt.

### Aufgabe der Erfindung

Die Erfindung hat die Aufgabe, Abfälle, gegebenenfalls nach dem Durchlaufen einer vorhergehenden biologischen Vorstufe, zu homogenisieren, um eine hohe und konstante Qualität für daraus herzustellende Ersatzbrennstoffe sicherzustellen. Des Weiteren soll die Konsistenz des behandelten Abfalls für die weiteren Behandlungsschritte optimal eingestellt werden. Dabei soll der biogene Anteil des aus dem Abfall erhaltenen Materials, also der Organikanteil, weitestgehend erhalten bleiben beziehungsweise ökologisch vorteilhaft genutzt werden. Des Weiteren soll die Anlage sicher und jederzeit beherrschbar sein.

### Offenbarung der Erfindung

Es wird ein Verfahren zur Behandlung von Abfällen in einer mechanischen oder mechanisch-biologischen Abfallbehandlungsanlage gemäß Anspruch 1.

Die Abfälle kommen aus einer vorgeschalteten biologischen Behandlungsanlage oder aus einem Abfallbunker und werden von dort, beispielsweise mit einem Förderband, einer Förderschnecke oder mit einem Kran an einer Eintragsstelle der Behandlungsanlage eingegeben. Das Einbringen der Abfälle kann je nach Bedarf kontinuierlich oder diskontinuierlich erfolgen. Die vorgeschlagene Abfallbehandlungsanlage ist bevorzugt als Mehr-Zonen-Reaktor (MZR) ausgeführt. Der MZR weist einen als länglichen Trog ausgeführten Reaktorbehälter auf, wobei der Reaktorbehälter in mindestens zwei Zonen aufgeteilt ist und jede dieser Zonen eine eigene Eintragsstelle aufweisen kann. Der MZR umfasst an einem Ende des Trogs eine Austragsstelle, an der der behandelte Abfall entnommen wird. Der Transport der in die Abfallbehandlungsanlage eingebrachten Abfälle erfolgt mittels Füllstandsausgleich, das heißt die Abfälle fließen ohne äußeren Antrieb von der mindestens einen Eintragsstelle in Richtung der mindestens einen Austragsstelle. Ist die Abfallbehandlungsanlage mit mehreren Eintragsstellen ausgeführt kann durch die Wahl der genutzten Eintragsstelle die Behandlungsdauer des eingebrachten Abfalls eingestellt werden. So können beispielsweise Abfälle, die zur Weiterbehandlung ohne wesentliche Aufenthaltszeit in der Abfallbehandlungsanlage geeignet sind, wie beispielsweise homogene faserige Stoffe oder Schlämme, über eine dicht an der Austragsstelle gelegene Eintragsstelle zugegeben werden.

In der Abfallbehandlungsanlage ist ein Rührwerk angeordnet, welches den eingebrachten Abfall homogenisiert. Gleichzeitig wird die Konsistenz des Abfalls durch Einstellen des Wassergehalts geregelt. Das Einstellen des Wassergehalts wird in jeder Zone getrennt durchgeführt. Dazu kann Wasser zugegeben oder entnommen werden oder es können weitere Abfälle eingebracht werden. Ist beispielsweise in einer Zone der Wassergehalt des Abfalls zu gering, werden in die betreffende Zone entweder Wasser oder, falls verfügbar, Abfälle, die einen höheren Wassergehalt als die bereits in der betreffenden Zone vorhandenen Abfälle aufweisen, wie beispielsweise Abfälle mit hohen biogenen Anteilen (z. B. Küchen-, Markt- oder Lebensmittelabfälle) oder Schlämme, zugeführt. Weisen die Abfälle in einer bestimmten Zone einen zu hohen Wasseranteil auf, werden entweder trockenere Abfälle, das heißt Abfälle welche einen geringeren Wasseranteil als die bereits in der Zone befindlichen Abfälle aufweisen, eingebracht, oder überschüssiges Wasser entnommen.

Welche Maßnahmen zur Regelung der Konsistenz des Abfalls in einer Zone ergriffen werden, also beispielsweise ob Wasser oder Abfall mit höherem Wassergehalt in die Zone eingebracht wird, ist abhängig davon, ob gerade entsprechende Abfälle zur Verfügung stehen und ob in der betreffenden Zone eine Eintragsstelle für Abfall bzw. Mittel zur Zufuhr von Wasser angeordnet sind. Gleiches gilt für die Entscheidung, ob Wasser entnommen oder Abfall mit geringem Wassergehalt eingebracht werden soll.

Durch die so vorgenommene Einregulierung des optimalen Wassergehalts wird eine kontrolliert hohe Verweilzeit des Wassers in der Abfallbehandlungsanlage erreicht. Dies gewährleistet zusammen mit dem Rührwerk einen intensiven Kontakt des Wassers mit dem Abfall und einen optimalen Stoffübergang wasserlöslicher Inhaltsstoffe in die Flüssigkeit. Bei einer späteren Fest-Flüssig-Trennung werden die in der Flüssigkeit gelösten und/oder suspendierten organischen und/oder anorganischen Bestandteile sowie gelöste und/oder suspendierte Schadstoffe entnommen. Durch die Kontrolle der zugeführten Wassermenge wird für einen hohen verbleibenden Organikanteil im Feststoff gesorgt. Durch diese Maßnahmen wird ein hoher biogener Anteil der aus dem behandelten Abfall hergestellten Brennstoffe gewährleistet, was sich bei der energetischen Verwertung dieser Brennstoffe klimagünstig auswirkt.

In einer Ausführungsform ist die Abfallbehandlungsanlage als Mehr-Zonen-Reaktor ausgeführt und in drei Zonen unterteilt. In der ersten Zone erfolgt eine intensive Bewässerung der eingebrachten Abfälle. Ziel ist das Herstellen einer stark breiigen Konsistenz mit einem Wassergehalt von etwa 70%. Zur Bewässerung wird vorzugsweise Kreislaufwasser (Abwasser aus einer Wasserbehandlung, aufbereitetes Prozesswasser, Brauchwasser) eingesetzt. Dadurch wird die Abwassermenge minimiert, was Ressourcen schont. Es kann aber auch Frischwasser verwendet werden.

In der zweiten Zone soll der angestrebte Wassergehalt von etwa 70% während der gesamten Verweilzeit des Abfalls gehalten werden. Dazu wird mit den oben bereits beschriebenen Maßnahmen die Konsistenz beziehungsweise der Wassergehalt des Abfalls nachreguliert.

In der dritten und letzten Zone wird vor dem Austrag des Abfalls eine definierte trockenere Konsistenz mit einem Wassergehalt von circa 60% angestrebt. Dieser Wassergehalt wird mit den oben bereits beschriebenen Maßnahmen eingestellt und gewährleistet die optimale beziehungsweise gleichbleibende nachgeschaltete Fest-Flüssig-Trennung und andere nachgeschaltete Verfahrensstufen (z. B. Biologische Trocknung)

Zur Vermeidung unerwünschter Emissionen, die zu einer Geruchsbelästigung führen können, ist der MZR rundum dicht geschlossen. Im Raum oberhalb des Abfallfüllstandsspiegels darf sich bei der Behandlung des Abfalls keine explosionsgefährliche Atmosphäre bilden. Dazu wird der Luftraum über dem Füllstandsspiegel mittels Luft und/oder einem Inertgas bewettert und die entnommene Abluft gereinigt. Eine Zufuhr von Sauerstoff und/oder Frischluft in die Abfälle ist nicht erforderlich, da in diesem Verfahren keine Unterstützung aerober biologischer Prozesse vorgesehen ist.

In einer bevorzugten Ausführungsform des Verfahrens werden im Abfall auftretende großvolumige Verklumpungen und/oder Anbackungen von Abfällen in sich und/oder am Rührwerk der Abfallbehandlungsanlage, die während des Homogenisierens gemäß Schritt b) auftreten können, aufgebrochen.

Durch diese Maßnahmen wird vermieden, dass sich um die Rührwerkswelle zylindrische Materialwalzen ausbilden mit bevorzugten Gleitflächen an den Wänden und am Boden der Abfallbehandlungsanlage. Eingebrachtes Wasser würde dann hauptsächlich an der Oberfläche abfließen und sich nicht mit Abfall vermischen.

In einer bevorzugten Ausführungsform des Verfahrens wird dem zu behandelnden Abfall das Wasser in Bereichen zugeführt, in denen der Abfall durch das Rührwerk und/oder als Folge des Aufbrechens von Verklumpungen und/oder Anbackungen aufgelockert wurde. Durch den Einsatz des Rührwerks und beim Aufbrechen der Verklumpungen und/oder Anbackungen entstehen Furchen im Abfall, durch die eingebrachtes Wasser leicht in tiefere Schichten eindringen kann. Das Einbringen von Wasser in diese Bereiche erleichtert das Herstellen eines gleichmäßigen Wassergehaltes im Abfall.

Während des Homogenisierens der Abfälle mit dem Rührwerk gemäß Schritt b) werden die eingebrachten Abfälle durchmischt.

In einer anderen Ausführungsform werden die eingebrachten Abfälle durch das Rührwerk gemäß Schritt b) selektiv zerkleinert. Die Zerkleinerungswirkung des Rührwerks wirkt ausschließlich auf weichere Materialien, bevorzugt biogener Natur wie Bioabfälle, ein. Harte Materialien durchlaufen die Abfallbehandlungsanlage ohne zerkleinert zu werden.

Der Transport des Abfalls von der mindestens einen Eintragsstelle zu der mindestens einen Austragsstelle erfolgt durch Füllstandsspiegelausgleich. Dabei fließt der Abfall aufgrund lokal unterschiedlicher Füllhöhen ohne äußere Einwirkung zu der mindestens einen Austragsstelle.

In einer bevorzugten Ausführungsform des Verfahrens unterstützt die Bewegung des Rührwerks den Transport des Abfalls. Dabei ist die Flussrichtung des Abfalls nicht von der Drehrichtung des Rührwerks abhängig. Die Unterstützung der Fließbewegung erfolgt dabei durch Rütteln und/oder Paddeln durch das Rührwerk. Da zur Unterstützung des Transports keine Vorschubelemente am Rührwerk angeordnet werden, wird die Flussrichtung des Abfalls nicht von der Drehrichtung des Rührwerks beeinflusst. Da die Drehrichtung des Rührwerks unabhängig vom Abfalltransport eingestellt werden kann, werden die Bewegungsrichtungen und eventuelle Drehrichtungswechsel so gewählt, dass Verklumpungen und Anbackungen von Abfällen weitestgehend vermieden werden.

In einer Ausführungsform des Verfahrens wird zum Ermitteln der Konsistenz des Abfalls in der Abfallbehandlungsanlage der Kraftbedarf des Rührwerks bestimmt. Bei geringem Wassergehalt weisen die Abfälle eine zähe Materialkonsistenz auf und verursachen beim Mischen und Rühren große Scherkräfte. Der Kraftbedarf für das Drehen der Rührwerkswelle ist groß. Bei einem hohen Wassergehalt hingegen weisen die Abfälle eine breiige bis flüssige Konsistenz auf und die auftretenden Scherkräfte sind kleiner. Der Kraftbedarf zum Drehen der Rührwerkswelle ist in diesem Fall geringer. Die zum Drehen der Rührwerkswelle erforderliche Kraft kann zum Beispiel über die Stromaufnahme des Antriebs des Rührwerks ermittelt werden.

In einer weiteren Ausführungsform der Erfindung erfolgt das Ermitteln der Konsistenz des Abfalls optisch, insbesondere über eine Kamera. Das Kamerabild kann beispielsweise auf einem Monitor in einem Leitstand dargestellt werden, wo es vom Betriebspersonal begutachtet werden kann. Ebenfalls denkbar ist eine automatische computergestützte Bildauswertung und/oder der Einsatz anderer Sensortypen.

In einer weiteren bevorzugten Variante des Verfahrens werden zur Ermittlung der Konsistenz mehrere Verfahren kombiniert, also beispielsweise die Stromaufnahme des Rührwerks überwacht und gleichzeitig die Konsistenz des Abfalls optisch begutachtet.

Ein weiterer Aspekt der Erfindung ist die Bereitstellung einer Vorrichtung zur mechanischen oder mechanisch-biologischen Behandlung von Abfällen nach dem soeben vorgestellten Verfahren, gemäß Anspruch 11.

Der Reaktorbehälter weist bevorzugt zumindest in der unteren Reaktorbehälterhälfte einen abgerundeten Querschnitt auf, insbesondere einen kreisbogenförmigen Querschnitt. Der Reaktorbehälter ist horizontal angeordnet, wobei in dieser Beschreibung auch eine geringe Neigung des Reaktorbehälters in Flussrichtung von bis zu drei Grad von dem Begriff horizontal umfasst wird. Eine solche geringe Neigung des zylinderförmigen Reaktorbehälters kann zur Unterstützung des Abfalltransports vorgesehen werden. Eine deutlich größere Neigung wird nicht bevorzugt, da ansonsten eine definierte lange Aufenthaltszeit des Wassers und des eingebrachten Abfalls nicht mehr gewährleistet ist.

Der Reaktorbehälter des MZR ist luftdicht ausgeführt, um unerwünschte Emissionen und Geruchsbelästigung zu vermeiden. Damit sich im Luftraum über dem Füllstandsspiegel im Reaktorbehälter keine explosionsgefährdete Atmosphäre bilden kann, umfasst die erfindungsgemäße Vorrichtung des Weiteren Mittel zur Zufuhr von Luft und/oder einem Inertgas sowie Mittel zur Entnahme von Abluft. In einer bevorzugten Ausführungsform werden die Mittel zur Zufuhr der Luft an oder in der Nähe der ersten Eintragsstelle angeordnet.

In einer Ausführungsform der Erfindung ist an mindestens einer Eintragsstelle ein Verschluss zum Verschließen der Eintragsstelle angeordnet. Der Verschluss der Eintragsstelle ist bevorzugt als Schieber ausgeführt. Die Verschließbarkeit der Eintragsstellen erleichtert es, den Reaktorbehälter gasdicht auszuführen und hilft auf diese Weise unerwünschte Emissionen zu vermeiden.

In weiteren Ausführungsformen der Erfindung ist der Verschluss einer oder mehrerer Eintragsstellen als Klappe ausgeführt. Weitere Verschlussgestaltungen, beispielsweise in Form eines abnehmbaren Deckels sind ebenfalls möglich, wobei eine gasdichte Ausführung des Verschlusses bevorzugt wird.

In einer bevorzugten Ausführungsform Erfindung ist mindestens einer der Verschlüsse zum Verschließen einer Eintragsstelle mit Mitteln zur Zufuhr von Luft ausgerüstet. Ist der Verschluss als Schieber ausgeführt, wird über die Stellung des Schiebers die Zuluftmenge gesteuert.
In einer Ausführungsform der Vorrichtung sind die Mittel zur Entnahme von Wasser als Schächte im Boden ausgeführt, wobei an den Schächten Schieber zum Verschließen dieser Schächte angeordnet sind.

Die Schächte sind bevorzugt an der tiefsten Stelle des zylinderförmigen Reaktorbehälters angeordnet und mit einem Gitter oder Sieb abgedeckt. Dadurch wird vermieden, dass größere Abfallstücke in die Schächte eindringen können. Die Schieber ermöglichen es durch Öffnen und Schließen die Entnahme von Wasser aus dem Inneren desReaktorbehälters zu steuern. Zur Entnahme von Wasser werden die Schieber geöffnet und Flüssigkeit kann durch das Gitter in den Schacht eindringen. Die einzelnen Schächte sind bevorzugt mit einem zentralen Ablauf über ein geeignetes Aggregat vorzugsweise eine zeitlich getaktete Spirale, verbunden.

In einer bevorzugten Ausführungsform ist an der Austragsstelle ein druckbeständiger Schieber angeordnet, wobei die Druckbeständigkeit so bemessen ist, dass der Schieber alle im Reaktorbehälter befindlichen Materialien und Abfälle in jedem Betriebszustand zurückhalten kann. Dieser Schieber ist eine wichtige Sicherheitsmaßnahme, mit der sichergestellt wird, dass keine Abfälle und/oder Flüssigkeiten unkontrolliert aus dem MZR entweichen können. Dies könnte beispielsweise auftreten wenn der Wassergehalt im Abfall zu hoch ist. Durch den druckbeständigen Schieber kann das Wasser-Abfall-Gemisch zurückgehalten werden, bis durch Entnahme von Wasser über die Schächte eine für eine kontrollierte Entnahme erforderliche Konsistenz wiederhergestellt ist. Auch die Schieber, welche die Schächte für die Entnahme von Wasser abdecken, stellen somit eine wichtige Sicherheitsmaßnahme dar.

Die Bodenöffnung im Reaktorbehälter für den Materialaustrag ist bevorzugt rechteckig ausgeführt und direkt an der rückwärtigen Stirnwand des Zylinders angeordnet, so dass zwischen den Behälterwänden und der Bodenöffnung kein Vorsprung verbleibt. In Ausführungsformen des Reaktorbehälters, bei denen die rückwärtige Stirnwand gebogen ausgeführt ist, ist es bevorzugt die Bodenöffnung abweichend von einer streng rechteckigen Form so auszuführen, dass sie der Kontur der rückwärtigen Wand folgt. Dies unterstützt einen geordneten Materialaustrag und verhindert Materialablagerungen an Vorsprüngen des Reaktorbehälters. Unter Material wird der in der Abfallbehandlungsanlage behandelte Abfall verstanden.

In einer bevorzugten Ausführungsform der Vorrichtung sind an dem Rührwerk Rührwerksarme und Verschleißschutzelemente angeordnet. Die Rührwerksarme unterstützen das Homogenisieren, Durchmischen und selektive Zerkleinern der Abfälle. Die Verschleißschutzelemente reduzieren Materialabrieb am Rührwerk und verlängern damit die Einsatzdauer. Eine mögliche Ausführungsform des Rührwerks und der Verschleißschutzelemente kann dem Gebrauchsmuster DE 20 2006 000 559 U1 entnommen werden.

In einer weiteren Ausführungsform der Erfindung sind in mindestens einer Zone Mittel zum Aufbrechen von Verklumpungen und Materialanbackungen angeordnet. Diese Mittel sind bevorzugt stabförmig und/oder schwertförmig ausgeführt und ausgehend von der Decke und/oder von einer Wand im Innenraum angeordnet.

In einer Ausführungsform der Erfindung sind die Mittel zur Zufuhr von Wasser als Öffnungen in der Decke des Behälters ausgeführt. Das Wasser gelangt aus diesen Öffnungen auf die Oberfläche des Abfalls und wird mithilfe des Rührwerks untergemischt und verteilt.

In einer bevorzugten Ausführungsform der Erfindung sind die Mittel zur Zufuhr von Wasser im Bereich der Rührwerksarme und/oder, sofern vorhanden, im Bereich der Mittel zum Aufbrechen von Materialverklumpungen und Anbackungen angeordnet. Da wie bereits beschrieben durch von den Rührwerksarmen verursachte Gräben Wasser tief in den Abfall eindringen kann, wird durch diese Maßnahme eine gleichmäßige Wässerung des Abfalls unterstützt.

In einer Ausführungsform der Erfindung umfasst die Vorrichtung des Weiteren Mittel zur optischen Überwachung des Innenraums. Diese können beispielsweise als Kamera ausgeführt sein. Durch diese Mittel wird eine Begutachtung der Konsistenz des in dem MZR beinhalteten Abfalls auf optischem Wege ermöglicht.

### Vorteile der Erfindung

Durch das erfindungsgemäße Verfahren wird während des Durchmischens und Homogenisierens Wasser nur aus dem Prozess entnommen, wenn der Abfall einen zu hohen Wassergehalt aufweist. Dadurch wird eine hohe Verweilzeit des Wassers im Prozess erreicht und der Wasserdurchsatz insgesamt gesenkt. Des Weiteren verbleibt im Abfall ein hoher Organikanteil, so dass der später daraus hergestellte Ersatzbrennstoff einen hohen biogenen Anteil aufweist. Stehen zudem Abfälle mit einem geringeren Wassergehalt als die gerade im Behälter befindlichen zur Verfügung, kann der Wassergehalt auch durch das Einbringen dieser trockeneren Abfälle insgesamt gesenkt werden. Da aus dem Prozess nur wenig Wasser entnommen wird, muss auch nur eine geringe Menge Wasser wiederaufbereitet werden. Entsprechende nachgeschaltete Aggregate werden nur gering beansprucht und können kleiner dimensioniert werden.

Durch das Vorsehen mehrerer Eintragsstellen in den verschiedenen Zonen der bevorzugt als Mehr-Zonen-Reaktor ausgeführten Abfallbehandlungsanlage kann ferner die Behandlungsdauer des Abfalls reguliert werden. So können beispielsweise homogene faserige oder schlammige Abfälle, welche nur eine geringe Aufenthaltsdauer in der Abfallbehandlungsanlage benötigen, an einer dicht an einer Austragsstelle gelegenen Eintragsstelle in die Abfallbehandlungsanlage eingebracht werden. Dadurch lässt sich die effektive Bearbeitungskapazität der Abfallbehandlungsanlage optimieren.

Ferner wird bei dem erfindungsgemäßen Verfahren keine oder nur eine geringe biologische Aktivität im Abfall angestrebt. Dadurch wird vermieden, dass zur Aufrechterhaltung aerober Prozesse große Mengen an sauerstoffreicher Luft in den Abfall eingebracht werden müssen. Bei dem erfindungsgemäßen Verfahren wird lediglich Luft oder Inertgas zugeführt, um die Bildung explosionsgefährdeter Atmosphären zu unterbinden. Als weiterer Effekt ergibt sich daraus, dass eine geringere Menge an Abluft zur Vermeidung unerwünschter Emissionen und Geruchsbelästigung in der Umgebung der Abfallbehandlungsanlage aufbereitet werden muss.

Das vorgesehene Aufbrechen von Verklumpungen und/oder Anbackungen verhindert sonst auftretende walzenförmige Materialansammlungen, die sich zusammen mit den Rührwerksarmen drehen würden. Das frühzeitige Aufbrechen dieser Materialansammlungen sorgt für eine verbesserte Homogenisierung des Abfalls und garantiert eine gleichbleibende Qualität des erhaltenen Ersatzbrennstoffes.

Das bevorzugte Einbringen von Wasser in die Bereiche, die von den Rührwerksarmen oder beim Aufbrechen von Verklumpungen aufgelockert wurden, sorgt dafür, dass das Wasser das Material leicht und vollständig durchdringen kann. Der Kontakt zwischen Abfall und Wasser wird erheblich verbessert und das Lösen von Schadstoffen aus den Abfällen erleichtert.

Durch die selektive Zerkleinerung der im Abfall enthaltenen Biomasse durch das Rührwerk können sich die organischen Bestandteile beim homogenisieren gleichmäßig im gesamten Material verteilen. Gleichzeitig bleiben die groben Strukturen des Materials erhalten. Die groben Materialstrukturen stellen eine gute Belüftbarkeit des Materials bei einer nachgeschalteten biologischen Trocknung sicher. Dadurch wird ein gleichmäßiges Trocknungsergebnis und eine gleichbleibende Qualität des aus dem Material gewonnenen Ersatzbrennstoffes gewährleistet.

Durch den Transport des eingebrachten Abfalls mittels Füllstandsspiegelausgleich werden zusätzliche Elemente für einen Vortrieb, beispielsweise an dem Rührwerk, überflüssig. Dadurch kann das Rührwerk zum einen vollständig auf seine Homogenisierungs- und Zerkleinerungsfunktion hin optimiert werden, zum anderen wird der Transport des Abfalls unabhängig von der Drehrichtung des Rührwerks. Dies erlaubt es, während des Durchmischens des Materials die Drehrichtung des Rührwerks mehrfach umzukehren. Auf diese Weise werden einseitiger Verschleiß verhindert und Umwicklungen durch längliche Abfallteile wie Schnüre, Seile, Folien und dergleichen vermindert..

Durch die vorgesehene optische Begutachtung des Innenraumes des Reaktorbehälters kann zum einen leicht auf die Materialkonsistenz geschlossen werden, zum anderen können mögliche kritische Systemzustände leicht erkannt und behoben werden.

Da bei dem erfindungsgemäßen Verfahren ein aerober Abbau bzw. eine aerobe Hydrolyse nicht aktiv unterstützt werden muss, ist es nicht erforderlich sauerstoffreiche Luft in den Abfall einzubringen. Auf die Anordnung entsprechender Systeme, wie beispielsweise Luftlanzen, kann deshalb verzichtet werden. Ebenso wirkt sich die deutlich geringere Wasserentnahme aus dem Prozess vorteilhaft auf die Mittel zur Entnahme von Wasser aus. Diese können nun in der Regel mit einem Schieber abgedeckt werden, so dass kein Material in diese eindringen kann. Ein Verstopfen der Mittel zur Entnahme von Wasser ist deswegen unwahrscheinlich und das Anordnen entsprechender Mittel zum Freikratzen oder Spülen der Mittel zur Entnahme von Wasser wird überflüssig.

Das Vorsehen eines druckfesten Schiebers an der mindestens einen Austragsstelle garantiert einen sicheren Betrieb der Anlage auch bei Fehlbedienung oder durch den Eintrag besonders wasserreicher Abfälle hervorgerufener kritischer Betriebszustände. In der Abfallbehandlungsanlage befindlicher Abfall oder freies Wasser kann zuverlässig zurückgehalten werden, bis die Materialkonsistenz wieder auf einen Wert eingestellt wurde, der eine sichere und kontrollierte Entnahme gestattet.

### Kurze Beschreibung der Zeichnungen

Anhand der Zeichnungen wird die Erfindung nachstehend eingehender beschrieben.

Es zeigt:
- Figur 1: eine Ausführungsvariante der erfindungsgemäßen Abfallbehandlungsanlage, drei Zonen aufweisend, in einer Ansicht von der Seite,
- Figur 2: zeigt eine schematische Ansicht einer Ausführungsform der erfindungsgemäßen Abfallbehandlungsanlage in einer Ansicht von oben,
- Figur 3: zeigt eine schematische Ansicht einer weiteren Ausführungsform der erfindungsgemäßen Abfallbehandlungsanlage, drei Zonen aufweisend, in einer Ansicht von oben,
- Figur 4: zeigt einen Schnitt durch die erfindungsgemäße Abfallbehandlungsanlage auf Höhe der Walzenbrecher in einer Ansicht von vorne,
- Figur 5: zeigt einen Schnitt durch die erfindungsgemäße Abfallbehandlungsanlage auf Höhe einer Eintragsstelle in einer Ansicht von vorne,
- Figur 6: zeigt einen Schnitt durch eine weitere Ausführungsform der erfindungsgemäßen Abfallbehandlungsanlage auf Höhe einer Austragsstelle in einer Ansicht von vorne.

### Ausführungsvarianten

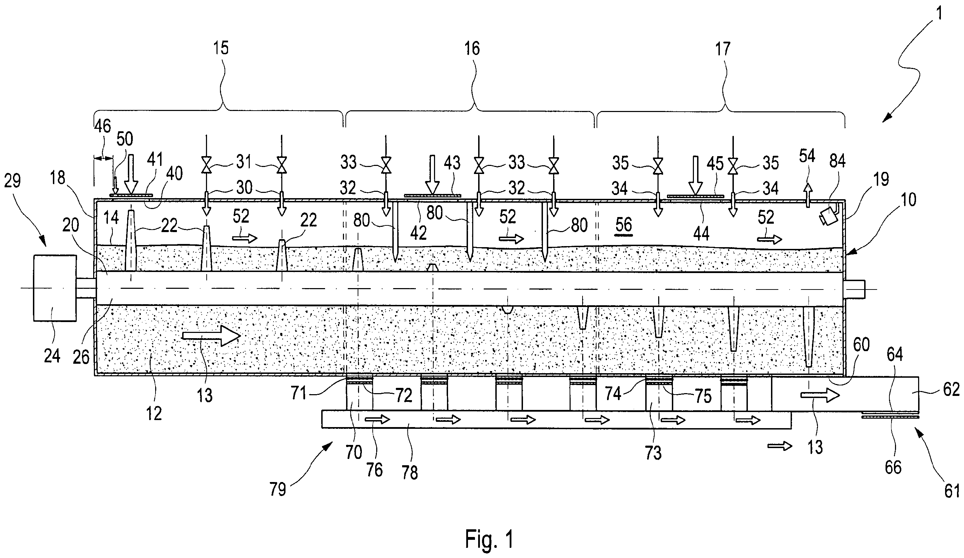

Der Figur 1 ist eine schematische Darstellung der erfindungsgemäßen Abfallbehandlungsanlage in einer Darstellung von der Seite zu entnehmen.

Figur 1 zeigt einen Reaktorbehälter 10, der als horizontaler Behälter ausgeführt ist. Die Länge des Reaktorbehälters 10 liegt typischerweise im Bereich von 20 m bis 30 m. Im unteren Bereich ist der Querschnitt des Reaktorbehälters bevorzugt rund, insbesondere als Kreisfläche ausgeführt. Der Durchmesser des Behälters 10 beträgt zwischen 3 m und 6 m. Im oberen Bereich sind neben abgerundeten Geometrien auch eckige, beispielsweise rechteckige Geometrien möglich. Beispiele werden in nachfolgenden Ansichten von vorne gegeben. Der Reaktorbehälter 10 nimmt eine Rührwerkswelle 20 auf, die den Reaktorbehälter 10 auf der gesamten Länge von der vorderen Stirnwand 18 bis zur rückwärtigen Wand 19 durchzieht. In der in Figur 1 dargestellten Ausführungsform durchbricht die Rührwerkswelle 20 die Stirnwand 18 und die rückwärtige Wand 19. Auf der Seite der Stirnwand 18 ist an der Rührwerkswelle 20 ein Rührwerksantrieb 24 angeordnet. Durch ihn ist das Rührwerk 29 in beide Drehrichtungen drehbar.
In anderen Ausführungsformen der Erfindung kann der Rührwerksantrieb 24 auch im Bereich der rückwärtigen Wand 19 angeordnet werden. Ebenfalls denkbar sind Ausführungsformen, bei denen auf beiden Seiten des Reaktorbehälters 10 ein Rührwerksantrieb angeordnet ist.

Im Inneren des Reaktorbehälters 10 ist die Rührwerkswelle 20 mit einem Verschleißschutz 26 überzogen. Je nach Ausführung des Verschleißschutzes 26 wird das Rührwerk 29 nicht nur durch eine Art Panzerung der Rührwerksarme 22 vor Verschleiß geschützt, sondern es wird auf der Rührwerkswelle 20 durch axial angebrachte Metallrippen eine kontrollierte Abfallablagerung erzeugt. Durch diese Abfallanlagerung wird Materialabrieb und Korrosion auf der Rührwerkswelle 20 selber vermieden. Auf der Rührwerkswelle 20 sind verteilt über die gesamte Länge des Reaktorbehälters 10 mehrere Rührwerksarme 22 angeordnet. In der in Figur 1 dargestellten Ausführungsform sind die Rührwerksarme 22 äquidistant zueinander angeordnet. Mit den Rührwerksarmen 22 wird im Reaktorbehälter 10 befindlicher Abfall 12 durchmischt. Um die bei der Durchmischung des Abfalls 12 auftretenden Kräfte gleichmäßig auf die Rührwerkswelle 20 zu übertragen, sind die Rührwerksarme 22 in verschiedenen Richtungen auf der Rührwerkswelle 20 angeordnet. In der in Figur 1 dargestellten Ausführungsform schließen zwei benachbarte Rührwerksarme 22 einen gleichbleibenden Winkel ein und die Richtung, in die die Rührwerksarme 22 zeigen, dreht sich von 0° an der Stirnseite 18 des Reaktorbehälters zu 180° an der rückwärtigen Seite 19 desReaktorbehälters 10. In weiteren Ausführungsformen der Erfindung sind auch andere Ausrichtungen möglich. Beispielsweise kann die Drehung der Ausrichtung der Rührwerksarme 22 ein Vielfaches von 180° betragen. Ebenfalls möglich ist eine pseudo zufällige Verteilung der Ausrichtungen der Rührwerksarme 22, bei der die Kräfte auf die Rührwerkswelle ausgeglichen sind.

In der in Figur 1 gezeigten Ausführungsform ist die Abfallbehandlungsanlage 1 als Mehr-Zonen-Reaktor (MZR) ausgeführt und in drei Zonen 15, 16, 17 eingeteilt. In jeder Zone ist in der Decke eine Öffnung 40, 42, 44 für den Abfalleintrag angeordnet. Die für den Abfalleintrag in der ersten Zone 15 vorgesehene Öffnung 40, ist dabei in einem Abstand 46 zur Stirnwand 18 angeordnet. Dadurch wird zum einen erreicht, dass sich eingebrachtes Material schneller im Inneren des Reaktorbehälters verteilen kann, zum anderen wird einem vorzeitigen Verschleiß an der Stirnseite 18 durch Materialabrieb vorgebeugt. Zum Verschließen der Eintragsöffnungen 40, 42, 44 ist jeder Öffnung ein Schieber 41, 43, 45 beigestellt. Dabei weist der Schieber 41 für die Eintragsöffnung 40 in der ersten Zone eine zusätzliche Öffnung 50 auf, durch die auch bei geschlossenem Schieber 41 Luft in einen Luftraum 56 über dem Füllstand 14 des Abfalls 12 eingebracht werden kann. Abluft wird dem Reaktorbehälter 10 über einen Luftabzug 54, der in der Nähe der rückwärtigen Wand 19 des Reaktorbehälters 10 angeordnet ist, entnommen. Dadurch wird eine Luftströmung in die mit Bezugszeichen 52 versehene Richtung erzeugt. Durch die stetige Luftströmung werden brennbare Gase aus dem Luftraum 56 entfernt, so dass sich keine explosionsgefährdete Atmosphäre ausbilden kann. Ebenfalls in der Decke angeordnet sind Öffnungen für den Wassereintrag 30, 32, 34. Diese Öffnungen sind über die gesamte Länge des Reaktorbehälters 10 und über alle Zonen 15, 16, 17 verteilt angeordnet. Oberhalb der Öffnungen für den Wassereintrag 30, 32, 34 befinden sich Wasserventile 31, 33, 35 über die die Menge des Wassereintrags gesteuert werden kann.

Die Öffnungen für den Wassereintrag 30, 32, 34 sind in der in Figur 1 dargestellten Ausführungsform bündig mit der Decke des Reaktorbehälters 10 angeordnet. In einer weiteren Ausführungsform der Erfindung sind die Öffnungen für den Wassereintrag 30, 32, 34 in Form von Rohren, welche teilweise in den Innenraum des Reaktorbehälters 10 hineinragen, ausgestaltet.

In der zweiten Zone 16 und in der dritten Zone 17 sind an der Unterseite des Reaktorbehälters 10 Mittel zur Entnahme von überschüssigem Wasser 79 angeordnet. Diese Mittel 79 umfassen Schächte 70, 73, die mit einem Sieb 71, 74 abgedeckt sind, um das Eindringen von Abfall in die Schächte 70, 73 zu verhindern. Zur Steuerung des Wasseraustrags sind Schieber 72, 75 an den Schächten 70, 73 angebracht, mit denen sich die Schächte 70, 73 dicht verschließen lassen. Aus dem Reaktorbehälter 10 entnommenes Wasser wird über die Schächte 70, 73 in einem zentralen Wasserablauf gesammelt, welcher in der in Figur 1 gezeigten Ausführungsform als Spirale 78 ausgeführt ist. Mit der Spirale 78 kann im Gegensatz zu einem gewöhnlichen Rohr auch Wasser mit einem großen Anteil an Schwimm- und Sinkstoffen und anderen suspendierten Substanzen zuverlässig abgeleitet werden. Die Flussrichtung des Wassers ist mit den Pfeilen 76 angezeigt.

In der dritten Zone 17 ist im Bereich der hinteren Wand 19 an der Unterseite des Behälters 10 eine Bodenöffnung 60 angeordnet. Zur Vermeidung von Materialablagerung im Bereich der rückwärtigen Wand 19 schließt sich die Bodenöffnung 60 bevorzugt unmittelbar an die rückwärtige Wand 19 an und ist bevorzugt mit einem rechteckigen Querschnitt versehen. Unterhalb der Bodenöffnung 60 schließt sich ein Austragsaggregat 61 an. In der gezeigten Ausführungsform ist das Austragsaggregat als Doppeltrogschnecke 62 ausgeführt. Weitere mögliche Ausführungsformen für das Austragsaggregat 61 umfassen Doppelspiralen, einfache Trogschnecken oder einfache Spiralen. Am rückwärtigen Ende der Doppeltrogschnecke 62 befindet sich im Boden eine Austragsöffnung 64. Zum Verschließen der Austragsöffnung 64 ist am Austragsaggregat 61 des Weiteren ein druckfester Schieber 66 angebracht. Die Druckfestigkeit des Schiebers 66 ist so gewählt, dass er in der Lage ist, den Abfall 12 in jedem Betriebszustand der erfindungsgemäßen Abfallbehandlungsanlage 1 zurückzuhalten.

Um eine bessere Überwachung des Inneren des Reaktorbehälters zu ermöglichen, ist im Reaktorbehälter 10 eine Kamera 84 angebracht. In der in Figur 1 dargestellten Ausführungsform ist die Kamera 84 im Bereich der rückwärtigen Wand 19 an der Decke des Reaktorbehälters 10 angebracht. In anderen Ausführungsformen ist eine Anordnung der Kamera auch in anderen Bereichen des Reaktorbehälters 10 möglich. Neben der Decke des Reaktorbehälters 10 sind auch die oberen Bereiche der Wände geeignet, um die Kamera 84 aufzunehmen. Denkbar ist auch eine Ausführungsform der Abfallbehandlungsanlage 1 bei der mehrere Kameras im Inneren des Reaktorbehälters 10 angebracht werden.

Um die Bildung von Materialwalzen durch Verbacken des Abfalls 12 in sich und/oder an der Rührwerkswelle 20 bzw. den Rührwerksarmen 22 zu verhindern, sind in der zweiten Zone 16, ausgehend von der Decke, mehrere Mittel zum Aufbrechen von Verklumpungen und/oder Anbackungen in Form von Walzenschneidern 80 angeordnet. Die Walzenschneider 80 sind bevorzugt stab-, keil-, oder schwerförmig ausgeführt und bevorzugt an der Decke fixiert.

Die in Figur 1 dargestellte Abfallbehandlungsanlage 1 ist als MZR ausgeführt und weist drei unterschiedliche Zonen 15, 16, 17 mit unterschiedlichen Aufgaben bzw. Behandlungsschritten und Behandlungsmöglichkeiten für eingebrachte Abfälle 12 auf.

In der ersten Zone 15 des MZR erfolgt eine intensive Bewässerung der eingebrachten Abfälle 12. Das Wasser wird über die Ventile 31 und die Öffnungen in der Decke 30 über dem eingebrachten Abfall 12 aufgebracht. Durch Drehung der Rührwerkswelle 20 beginnen die Rührwerksarme 22 den Abfall 12 zu homogenisieren und selektiv zu zerkleinern. In der in Figur 1 dargestellten Ausführungsform befinden sich die Öffnungen 30 für den Wassereintrag direkt über den Rührwerksarmen 22 in der ersten Zone 15. Das Wasser fließt direkt durch die von den Rührwerksarmen 22 in dem Abfall 12 erzeugten Gräben und kann auf diese Weise tief in den Abfall 12 eindringen. Angestrebt wird eine stark breiige Konsistenz des Abfalls 12 mit einem Wassergehalt von etwa 70 %. Einen Hinweis auf die Konsistenz des Abfalls 12 liefert der Strombedarf des Rührwerksantriebs 24. Bei zu fester Konsistenz also zu geringem Wassergehalt, wird am Rührwerksantrieb 24 ein erhöhter Strombedarf für die Drehung des Rührwerks 29 festgestellt. Bei einem zu hohen Wassergehalt treten entsprechend geringere Kräfte auf oder es wird ein geringerer Strombedarf als im Normalbetrieb gemessen. Durch Füllstandsspiegelausgleich fließt das eingebrachte Material 12 in die mit dem Bezugszeichen 13 angegebene Richtung weiter in die zweite Zone 16. Für das Fließen von der ersten Zone 15 in die zweite Zone 16 benötigt der eingebrachte Abfall 12 bis zu einem Tag.

Um den gewünschten Wassergehalt einzustellen, werden bevorzugt Kreislaufwässer (Prozesswässer oder Brauchwässer) eingesetzt. Die Zuführung von Frischwasser ist möglich, wird jedoch nicht bevorzugt, da extern zugeführtes Frischwasser die aufzubereitende Abwassermenge erhöht.

In der zweiten Zone 16 des MZR soll während der Verweilzeit des Abfalls 12, die ebenfalls bis zu etwa einem Tag beträgt, die angestrebte Konsistenz mit einem Wassergehalt von etwa 70 % eingestellt bzw. gehalten werden. Einen Hinweis auf die Konsistenz bzw. den Wassergehalt des Abfalls 12 erhält man wieder über den Strombedarf des Rührwerkantriebs 24. Ist der Wassergehalt des Abfalls 12 zu groß, können die Schieber 72 geöffnet werden, um ein Teil des Wassers zu entnehmen. Da das Wasser einen hohen Anteil an organischen Substanzen aufweist, kann es beispielsweise einer Biogasanlage zur Nachbehandlung zugeführt werden.

Eine weitere Möglichkeit zur Reduzierung des Wassergehalts des Abfalls 12 ist die Zugabe von Abfällen, die einen geringeren Wassergehalt als die im Reaktorbehälter 10 befindlichen Abfälle 12 aufweisen. Diese trockeneren Abfälle können über die Öffnung 42 direkt in die zweite Zone 16 eingebracht werden.

Ist der Wassergehalt des Abfalls 12 hingegen zu gering, kann über die Öffnungen für den Wassereintrag 32 in der Decke durch Öffnen der Ventile 33 Wasser eingebracht werden. Da in der gezeigten Ausführungsform in der zweiten Zone 16 Walzenschneider 80 installiert sind, ist es bevorzugt, die Öffnungen für den Wassereintrag 32 im Bereich der Walzenschneider 80 anzuordnen. Die Walzenschneider 80 lockern den Abfall 12 auf und erleichtern so den Wassereintrag. Alternativ kann wiederum über die Eintragsöffnung 42 Abfall eingebracht werden, der einen größeren Wassergehalt als der Abfall 12 im Inneren des Reaktorbehälters 10 aufweist. Beispiele dafür sind Abfälle mit hohen biogenen Anteilen (z. B. Küchen-, Markt- oder Lebensmittelabfälle) oder Schlämme. Der Abfall 12 fließt durch den Füllstandsspiegelausgleich von der zweiten Zone 16 weiter in die dritte Zone 17.

Die dritte Zone 17 des MZR stellt eine Vorentwässerung bzw. Abtropfzone vor dem nachgeschalteten Austrag dar. Die stark breiige Konsistenz des Abfalls 12 mit einem Wassergehalt von etwa 70 % wird auf eine definierte trockenere Konsistenz mit einem Wassergehalt von etwa 60 % reduziert. Der reduzierte Wassergehalt gewährleistet die optimale bzw. gleichbleibende nachgeschaltete Fest-Flüssig-Trennung. Da eine trockenere Konsistenz des Abfalls 12 größere Kräfte auf das Rührwerk 29 ausübt, ist es bevorzugt, auch in der dritten Zone 17 Öffnungen für den Wassereintrag 34 anzubringen, um durch einen Wassereintrag gegebenenfalls die auftretenden Kräfte zu reduzieren. Überschüssiges Wasser wird wieder über Schächte 73 im Boden abgeleitet.

Ein Betrieb der Abfallbehandlungsanlage 1 bei einem reduzierten Wassergehalt führt zu höheren inneren Reibungskräften im Abfall 12. Dies erleichtert die abschließende Homogenisierung des Abfalls 12 und fördert die weitere Zerkleinerung stückiger Abfallbestandteile.

Über die Bodenöffnung 60 gelangt der Abfall 12 schließlich in das Austragsaggregat 61 von wo er über die Doppeltrogschnecke 62 zur Austragsöffnung 64 befördert wird. Im Anschluss an die erfindungsgemäße Abfallbehandlungsanlage 1 kann der behandelte Abfall einer Vorrichtung zum Trocknen der Abfälle zugeführt werden, wo er beispielsweise durch Auspressen und einer anschließenden biologischen Trocknung zu einem Ersatzbrennstoff verarbeitet wird. Durch die Ausführung der Abfallbehandlungsanlage 1 als MZR mit einer Unterteilung in drei Zonen 15, 16, 17 und den in den jeweiligen Zonen angeordneten Öffnungen für den Abfalleintrag 40, 42, 44, können unterschiedliche Abfälle an unterschiedlichen Stellen in die Abfallbehandlungsanlage 1 eingegeben werden, um deren Behandlungszeit zu optimieren. So erfolgt beispielsweise in der ersten Zone 15 bevorzugt die Zuführung von üblichen Resthausabfällen. In der zweiten Zone 16 können beispielsweise Abfälle, die zur Homogenisierung keine weiteren Scherkräfte benötigen und leicht homogenisierbar sind, wie beispielsweise flüssige oder breiige Abfälle zugeführt werden. In der dritten Zone 17 werden vorzugsweise Abfälle eingebracht, die schon weitgehend homogen und kleinstückig und zur Weiterbehandlung ohne wesentliche Aufenthaltszeit in der Abfallbehandlungsanlage 1 geeignet sind, wie beispielsweise faserige Stoffe oder Spuckstoffe.

Neben der Überwachung der Materialkonsistenz über die Stromaufnahme des Rührwerkantriebs 24 kann die Konsistenz des Abfalls 12 im Inneren des Reaktorbehälters 10 auch über die Kamera 84 begutachtet werden. Dies ermöglicht es, jederzeit vom Leitstand aus regulierende Maßnahmen wie eine Nachbewässerung oder die Ableitung von überschüssigem Wasser zu ergreifen, unabhängig von der jeweils herrschenden Stromaufnahme. Dies ist auch deshalb vorteilhaft, weil eine definierte Stromaufnahme nicht zwangsweise mit einem konkreten Wassergehalt im Abfall 12 korrelieren muss, sondern auch von andern Faktoren (zum Beispiel spezielle Abfallzusammensetzung aufgrund jahreszeitlicher Schwankungen oder der Abfallherkunft) beeinflusst werden kann.

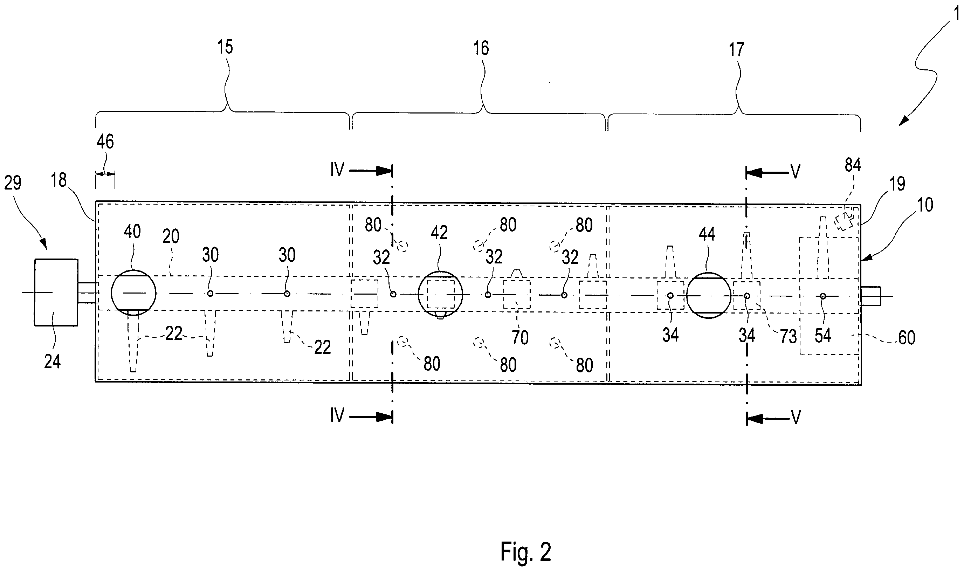

In Figur 2 ist eine schematische Darstellung der erfindungsgemäßen Abfallbehandlungsanlage in einer Ansicht von oben dargestellt.

In Figur 2 ist der zylindrische Behälter 10 der Abfallbehandlungsanlage 1 von oben dargestellt. Das Rührwerk 29 mit seiner Rührwerkswelle 20 durchzieht die gesamte Länge des Reaktorbehälters 10 von der Stirnwand 18 bis zur rückwärtigen Wand 19. Außerhalb des Reaktorbehälters 10 im Bereich der Stirnwand 18 ist der Rührwerksantrieb 24 angeordnet. Im Inneren des Behälters 10 sind auf der Rührwerkswelle 20 der Verschleißschutz 26 und die Rührwerksarme 22 angeordnet. Die Rührwerksarme 22 sind äquidistant über die gesamte Länge des Reaktorbhälters 10 verteilt. Die Richtung, die die Rührwerksarme 22 zeigen, ist dabei wieder jeweils unterschiedlich gewählt.

Die in Figur 2 dargestellte Abfallbehandlungsanlage 1 ist wieder als MZR ausgeführt und deren Reaktorbehälter 10 ist in drei Zonen 15, 16, 17 unterteilt. Injeder der drei Zonen sind Öffnungen für den Abfalleintrag 40, 42, 44 vorgesehen, sowie Öffnungen für den Wassereintrag 30, 32, 34. Die Öffnung für den Abfalleintrag 40 in der ersten Zone 15 ist mit einem Abstand 46 zur Stirnwand 18 angeordnet, um einen vorzeitigen Verschleiß der Stirnwand 18 zu verhindern. Wie man der Darstellung in Figur 2 entnehmen kann, ist einer der Rührwerksarme 22 jeweils direkt unter einer der Öffnungen für den Abfalleintrag 40, 42, 44 angeordnet. In der ersten Zone 15 und in der dritten Zone 17 befinden sich die Öffnungen für den Wassereintrag 30 bzw. 34 ebenfalls über jeweils einem Rührwerksarm 22. In der zweiten Zone 16 sind Walzenschneider 80 angeordnet und die Öffnungen für den Wassereintrag 32 in der zweiten Zone 16 sind abweichend von den anderen Zonen in der Nähe der Walzenschneider 80 angebracht. Am Ende des Reaktorbehälters 10 direkt an der Rückwand 19 befindet sich die Bodenöffnung 60, die einen rechteckigen Querschnitt aufweist. Im Boden des Reaktorbehälters 10 sind wieder Schächte 70, 73 angeordnet, um überschüssiges Wasser abführen zu können. In der in Figur 2 dargestellten Ausführungsform sind sämtliche Öffnungen in der Decke des Reaktorbehälters 10 in der Mitte direkt über dem Rührwerk 29 angeordnet.

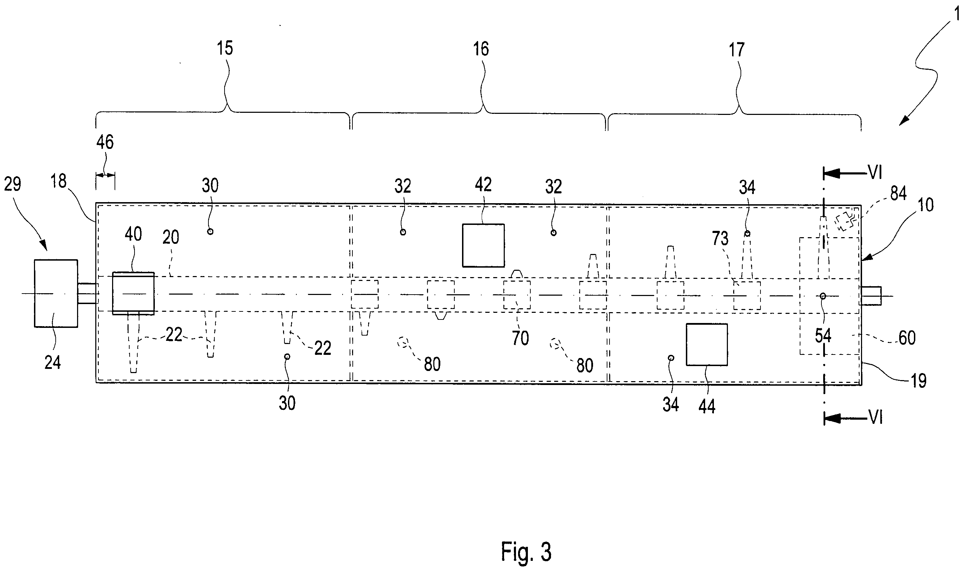

Figur 3 zeigt eine weitere Ausführungsform der erfindungsgemäßen Abfallbehandlungsanlage in einer Ansicht von oben.

In Figur 3 ist der Reaktorbehälter 10 der Abfallbehandlungsanlage 1 dargestellt. Das Rührwerk 29 verläuft über die gesamte Länge des zylindrischen Reaktorbehälters 10 von der Stirnseite 18 bis zur rückwärtigen Wand 19. Wie in den vorangegangenen Ausführungsformen weist das Rührwerk wieder einen Rührwerksantrieb 24, einen Verschleißschutz 26 und eine Vielzahl von Rührwerksarmen 22 auf. Der Reaktorbehälter 10 ist aufgrund der Ausführung als MZR wieder in drei Zonen 15, 16, 17 unterteilt und weist in der Decke verschiedene Öffnungen auf. In der ersten Zone 15 ist in der Decke des Reaktorbehälters 10 eine Öffnung für den Abfalleintrag 40 zentral über dem Rührwerk 29 in einem Abstand 46 von der Stirnwand 18 angeordnet. Die Öffnungen für den Wassereintrag 30 in der ersten Zone 15 sind in der in Figur 3 dargestellten Ausführungsform zwar nach wie vor auf Höhe eines der Rührwerksarme 22, jedoch versetzt von der Mitte des Reaktorbehälters 10 angeordnet. Im Bereich der zweiten Zone 16 sind wieder ausgehend von der Decke auf einer Seite des Rührwerks 29 Walzenschneider 80 angeordnet. Die Öffnungen für den Wassereintrag 32 in der zweiten Zone 16 sind wiederum auf Höhe der Walzenschneider 80, jedoch ebenfalls versetzt von der Mitte des Reaktorbehälters 10 angebracht. Gleiches gilt für die Öffnung für den Abfalleintrag 42 in der zweiten Zone 16, welche ebenfalls versetzt vom Rührwerk 29, jedoch auf Höhe eines der Rührwerksarme 22 angebracht ist. In der dritten Zone 17 sind die Öffnungen für den Wassereintrag 34 ebenfalls nicht direkt über dem Rührwerk 29 angebracht, jedoch jeweils im Bereich eines der Rührwerksarme 22. Auch die Öffnung für den Abfalleintrag 44 in der dritten Zone 17 ist in der in Figur 3 dargestellten Ausführungsform versetzt vom Rührwerk 29 angebracht. Im Bereich der rückwärtigen Wand 19 befindet sich im Boden des Reaktorbehälters 10 die Bodenöffnung 60, welche direkt an die rückwärtige Wand 19 anschließt. Die Bodenöffnung 60 weist wie in den vorangegangenen Ausführungsformen einen rechteckigen Querschnitt auf.

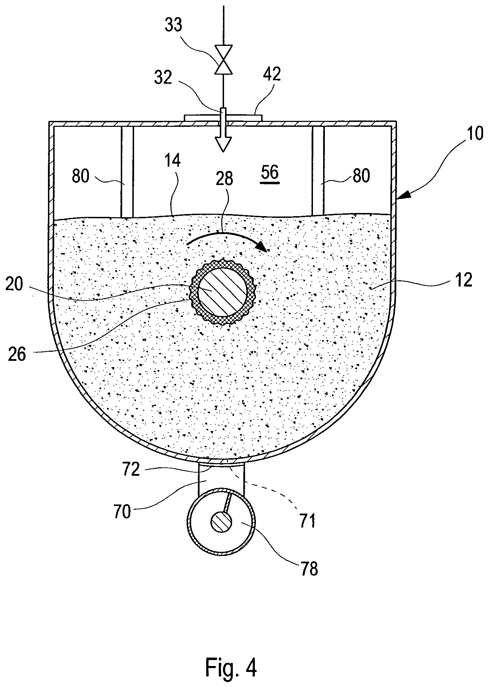

Der Figur 4 kann eine Schnittdarstellung der erfindungsgemäßen Abfallbehandlungsanlage gemäß Figur 2 entlang der mit IV gekennzeichneten Linie in einer Darstellung von vorne entnommen werden.

Die Figur 4 zeigt einen Schnitt durch die erfindungsgemäße Abfallbehandlungsanlage 1 auf Höhe der Walzenschneider 80 in der zweiten Zone 16. Zu erkennen ist die Querschnittsfläche des Reaktorbehälters 10, die im unteren Bereich abgerundet ist und nahezu kreisförmig ausgeführt ist. Zur oberen Seite des Reaktorbehälters 10 geht die Form in ein Rechteck über. Im Boden des Reaktorbehältrs 10 befindet sich der Schacht 70 für die Wasserentnahme. Der Schacht 70 ist mit einem Gitter 71 abgedeckt und kann mit einem Schieber 72 dicht verschlossen werden. In der in Figur 4 dargestellten Ausführungsform sind das Gitter 71 und der Schieber 72 gebogen ausgeführt und folgen der Rundung des Reaktorbehälters 10. Unterhalb des Schachtes 70 ist eine Spirale 78 angeordnet, die das Wasser mitsamt darin gelösten Stoffen und suspendierten Schwebstoffen abtransportiert. In der Mitte des Behälters 10 ist die Rührwerkswelle 20 zu erkennen, auf der der Verschleißschutz 26 angebracht ist. Die Drehrichtung des Rührwerks 29 ist mit dem mit Bezugszeichen 28 bezeichneten Pfeil angedeutet. Während der Abfall 12 im Inneren des Reaktorbehälters 10 verarbeitet wird, wird die Drehrichtung der Rührwerkswelle 20 mehrfach geändert. Dadurch wird vermieden, dass sich lange Fasern, Folien und Ähnliches um die Rührwerkswelle 20 wickeln können. Ausgehend von der Decke des Reaktorbehälters 10 sind die Walzenschneider 80 angeordnet. Durch die Walzenschneider 80 wird verhindert, dass sich das gesamte Material 12 als eine einzige zylindrische Walze zusammen mit der Rührwerkswelle 20 dreht. In der Decke des Reaktorbehälters 10 ist eine der Öffnungen für den Wassereintrag 32 in der zweiten Zone 16 zu erkennen.

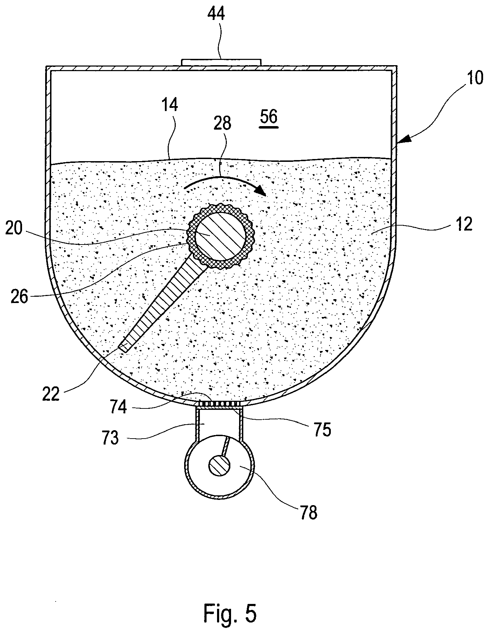

In der Figur 5 ist ein Schnitt an der mit V gekennzeichneten Stelle in der in Figur 2 dargestellten Abfallbehandlungsanlage dargestellt.

Der Figur 5 kann der Querschnitt des Reaktorbehälters 10 entnommen werden. Im unteren Bereich ist der Querschnitt des Reaktorbehälters 10 rund, insbesondere wie hier gezeigt nahezu kreisbogenförmig ausgeführt. Im oberen Bereich geht der Querschnitt in eine rechteckige Form über. In der Mitte des Reaktorbehälters 10 ist die Rührwerkswelle 20 mit dem Verschleißschutz 26 zu erkennen. In dem in Figur 5 dargestellten Schnitt ist außerdem einer der Rührwerksarme 22 zu erkennen. Im Boden des Reaktorbehälters 10 ist genau wie bei dem vorangegangenen Schnitt einer der Schächte 73 zur Entnahme von überschüssigem Wasser zu erkennen. Der Schacht 73 ist wiederum mit einem Gitter 74 abgedeckt und kann durch einen Schieber 75 dicht verschlossen werden. In der in Figur 5 dargestellten Ausführungsform sind das Gitter 74 und der Schieber 75 plan ausgeführt und folgen der Rundung des Reaktorbehälters 10 nicht. Das entnommene Wasser wird über die Spirale 78 abgeleitet. In der Decke des Reaktorbehälters 10 ist eine der Öffnungen für den Abfalleintrag 44 zu erkennen.

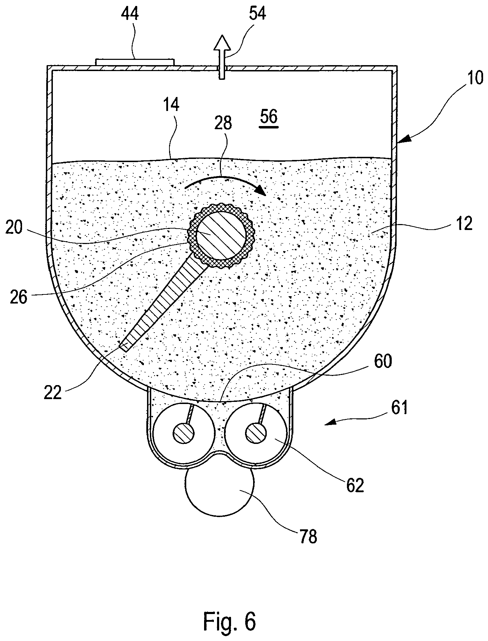

Der Figur 6 kann ein Schnitt entlang der mit VI gekennzeichneten Linie in der Darstellung der Abfallbehandlungsanlage gemäß Figur 3 entnommen werden.

In der in Figur 6 dargestellten Ausführungsform der Abfallbehandlungsanlage 1 weist der Reaktorbehälter 10 einen im Wesentlichen kreisförmigen Querschnitt auf. In der Mitte des Reaktorbehälters 10 ist die Rührwerkswelle 20 mit dem Verschleißschutz 26 und einem der Rührwerksarme 22 zu erkennen. Im unteren Bereich des Reaktorbehälters 10 befindet sich die Bodenöffnung 60, durch die der Abfall 12 in das Austragsaggregat 61 gelangen kann. Von dort wird der Abfall 12 über das bevorzugt als Doppeltrogschnecke 62 ausgeführte Austragsaggregat 61 zur Austragsöffnung 64 transportiert. Der direkt über der Bodenöffnung 60 angeordnete Rührwerksarm 22 unterstützt den Fluss des Abfalls 12 in Richtung des Austragsaggregats 61.

### Bezugszeichenliste

- 1: Abfallbehandlungsanlage
- 10: Reaktor / trogförmiger Behälter
- 12: Abfall bzw. Material im Reaktor
- 13: Flussrichtung des Abfalls bzw. des Materials
- 14: Füllstand
- 15: erste Zone
- 16: zweite Zone
- 17: dritte Zone
- 18: vordere Stirnwand
- 19: hintere Stirnwand
- 20: Rührwerkswelle
- 22: Rührwerksarme
- 24: Rührwerksantrieb
- 26: Verschleißschutz
- 28: Drehrichtung
- 29: Rührwerk
- 30: Öffnung für den Wassereintrag in die erste Zone
- 31: Ventil für den Wassereintrag in die erste Zone
- 32: Öffnung für den Wassereintrag in die zweite Zone
- 33: Ventil für den Wassereintrag in die zweite Zone
- 34: Öffnung für den Wassereintrag in die dritte Zone
- 35: Ventil für den Wassereintrag in die dritte Zone

- 40: Öffnung für den Abfalleintrag in die erste Zone
- 41: Schieber mit Luftzufuhr in der ersten Zone
- 42: Öffnung für den Abfalleintrag in die zweite Zone
- 43: Schieber am Abfalleintrag in der zweiten Zone
- 44: Öffnung für den Abfalleintrag in die dritte Zone
- 45: Schieber am Abfalleintrag in der dritten Zone
- 46: Abstand zur Stirnwand

- 50: Lufteintrag
- 52: Luftströmung
- 54: Luftabzug
- 56: Luftraum

- 60: Bodenöffnung
- 61: Austragsaggregat
- 62: Doppel-Trogschnecke
- 64: Austragsöffnung
- 66: druckfester Schieber

- 70: Schacht für Wasserentnahme in der zweiten Zone
- 71: Gitter/Sieb für Wasserentnahme in der zweiten Zone
- 72: Schieber für Wasserentnahme in der zweiten Zone
- 73: Schacht für Wasserentnahme in der dritten Zone
- 74: Gitter für Wasserentnahme in der dritten Zone
- 75: Schieber für Wasserentnahme in der dritten Zone
- 76: Flussrichtung Wasserablauf
- 78: (zeitlich getaktete) Spirale
- 79: Mittel zur Entnahme von Wasser
- 80: Walzenschneider
- 84: Kamera

## Patentansprüche

1. Verfahren zur Behandlung von Abfällen (12) in einer mechanischen oder mechanisch-biologischen Abfallbehandlungsanlage (1), folgende Schritte umfassend:
a) Einbringen von Abfällen (12) in einen Behälter (10) einer Abfallbehandlungsanlage (1) an mindestens einer Eintragsstelle (40, 42, 44),
b) Homogenisieren der Abfälle (12) mit mindestens einem Rührwerk (29), welches sich über die gesamte Länge des Behälters (10) erstreckt,
c) Ermitteln der Konsistenz der Abfälle (12) in der Abfallbehandlungsanlage (1),
d) Zugabe von Wasser oder von Abfällen, die einen höheren Wassergehalt als die Abfälle (12) in der Abfallbehandlungsanlage (1) aufweisen, wenn der Wassergehalt des Abfalls (12) in der Abfallbehandlungsanlage (1) unter einem angestrebten Wassergehalt liegt, bzw. Entnahme von Wasser oder Zugabe von einen geringeren Wassergehalt aufweisenden Abfällen, wenn der Wassergehalt des Abfalls (12) über dem angestrebten Wassergehalt liegt,
e) Transport des eingebrachten Abfalls (12) zu mindestens einer Austragsstelle (64),
f) Entnahme des Abfalls,
**dadurch gekennzeichnet, dass** der Behälter (10) der Abfallbehandlungsanlage (1) in mindestens zwei Zonen (15, 16, 17) unterteilt ist, die Abfälle (12) jede Zone (15, 16, 17) zwischen der Eintragsstelle (40, 42, 44) und der Austragsstelle (64) nacheinander durchlaufen und in jeder Zone (15, 16, 17) die Konsistenz des Abfalls (12) durch den Eintrag von Abfällen und/oder Zugabe oder Entnahme von Wasser getrennt geregelt und eingestellt wird und wobei die Behandlungsdauer des eingebrachten Abfalls eingestellt wird durch Auswahl einer Eintragsstelle aus mehreren Eintragsstellen (40, 42, 44) und Einbringen des Abfalls an der ausgewählten Eintragsstelle (40, 42, 44), wobei für Abfälle, die eine kurze Behandlungsdauer benötigen, eine dicht an der Austragsstelle (64) gelegene Eintragsstelle (44) ausgewählt wird.

2. Verfahren nach Anspruch 1, **dadurch gekennzeichnet, dass** einem Luftraum (56) über einem Füllstand (14) des Abfalls (12) Luft und/oder ein Inertgas zugeführt wird und Abluft entnommen wird.

3. Verfahren nach Anspruch 1 oder 2, **dadurch gekennzeichnet, dass** während des Homogenisierens gemäß Schritt b) entstehende Verklumpungen und/oder Anbackungen von Abfällen (12) durch Rührwerksarme (22) des Rührwerks (29) und/oder Mitteln zum Aufbrechen von Verklumpungen und/oder Anbackungen (80) von Abfällen (12) aufgebrochen werden.

4. Verfahren nach Anspruch 3, wobei das Wasser dem behandelten Abfall (12) in den Bereichen zugeführt wird, in denen der Abfall (12) durch die Rührwerksarme (22) des Rührwerks (29) und/oder den Mitteln zum Aufbrechen von Verklumpungen und/oder Anbackungen (80) von Abfällen (12) aufgelockert werden.

5. Verfahren nach einem der vorhergehenden Ansprüche, **dadurch gekennzeichnet, dass** die eingebrachten Abfälle (12) durch das Rührwerk (29) gemäß Schritt b) durchmischt werden.

6. Verfahren nach einem der vorhergehenden Ansprüche, **dadurch gekennzeichnet, dass** die eingebrachten Abfälle (12) durch das Rührwerk (29) gemäß Schritt b) selektiv zerkleinert werden, wobei weiche biologische Materialien zerkleinert werden und harte Materialien die Abfallbehandlungsanlage (1) ohne zerkleinert zu werden durchlaufen.

7. Verfahren nach einem der vorhergehenden Ansprüche, **dadurch gekennzeichnet, dass** der Transport des Abfalls (12) durch Füllstandsspiegelausgleich erfolgt.

8. Verfahren nach Anspruch 7, **dadurch gekennzeichnet, dass** die Bewegung des mindestens einen Rührwerks (29) den Transport der eingebrachten Abfälle (12) unterstützt, wobei die Flussrichtung (13) des Abfalls (12) nicht von der Drehrichtung (28) des mindestens einen Rührwerks (29) abhängig ist.

9. Verfahren nach einem der vorhergehenden Ansprüche, **dadurch gekennzeichnet, dass** das Ermitteln der Konsistenz des Abfalls (12) in der Abfallbehandlungsanlage (1) über den Kraftbedarf des mindestens einen Rührwerks (29) erfolgt.

10. Verfahren nach einem der vorhergehenden Ansprüche, **dadurch gekennzeichnet, dass** das Ermitteln der Konsistenz des Abfalls (12) optisch, insbesondere über eine Kamera (84) erfolgt.

11. Vorrichtung zur mechanischen oder mechanisch-biologischen Behandlung von Abfällen (12) nach einem Verfahren gemäß einem der Ansprüche 1 bis 10 umfassend einen zylinderförmigen horizontalen Behälter (10), mehrere Eintragsstellen (40, 42, 44), mindestens eine Austragsstelle (64) an einem Ende des Behälters (10) und mindestens ein horizontales Rührwerk (29), welches sich über die gesamte Länge des Behälters (10) erstreckt, **dadurch gekennzeichnet, dass** der Behälter (10) in mindestens zwei Zonen (15, 16, 17) unterteilt ist, wobei jede Zone (15, 16, 17) Mittel von Zufuhr von Wasser (30 bis 35) aufweist, mehrere Zonen (15, 16, 17) mit einer Eintragsstelle (40, 42, 44) versehen sind und in mindestens einer Zone (15, 16, 17) Mittel zur Entnahme von Wasser (79) angeordnet sind, in jeder Zone (15, 16, 17) ein anderer Wassergehalt des Abfalls (12) einstellbar ist und die Vorrichtung eingerichtet ist, Abfälle (12) von einer Eintragsstelle (40, 42, 44) zu der Austragstelle (64) durch die jeweiligen dazwischenliegenden Zonen (15, 16, 17) zu transportieren, wobei die Vorrichtung ferner eingerichtet ist, eine Behandlungsdauer des eingebrachten Abfalls einzustellen durch Auswahl einer Eintragsstelle aus den mehreren Eintragsstellen (40, 42, 44) und Einbringen des Abfalls an der ausgewählten Eintragsstelle (40, 42, 44), wobei für Abfälle, die eine kurze Behandlungsdauer benötigen, eine dicht an der Austragsstelle (64) gelegene Eintragsstelle (44) ausgewählt wird.

12. Vorrichtung nach Anspruch 11, weiter umfassend Mittel zur Zufuhr von Luft (50) und/oder einem Inertgas sowie Mittel zur Entnahme von Abluft (54).

13. Vorrichtung nach Anspruch 11 oder 12, **dadurch gekennzeichnet, dass** an mindestens einer Eintragsstelle (40, 42, 44) ein Verschluss (41, 43, 45) zum Verschließen der Eintragsstelle (40, 42, 44) angeordnet ist.

14. Vorrichtung nach Anspruch 13, wobei mindestens ein Verschluss (41, 43, 45) zum Verschließen einer Eintragsstelle (40, 42, 44) Mittel zur Zufuhr von Luft (50) und/oder einem Inertgas aufweist.

15. Vorrichtung nach einem der Ansprüche 11 bis 14, **dadurch gekennzeichnet, dass** die Mittel zur Entnahme von Wasser (79) als Schächte im Boden (70, 73) ausgeführt sind, wobei an den Schächten (70, 73) Schieber (72, 75) zum Verschließen der Schächte (70, 73) angeordnet sind.

16. Vorrichtung nach einem der Ansprüche 11 bis 15, **dadurch gekennzeichnet, dass** an der mindestens einen Austragsstelle (64) ein druckbeständiger Schieber (66) angeordnet ist, wobei die Druckbeständigkeit so bemessen ist, dass der Schieber (66) den im Behälter (10) befindlichen Abfall (12) in jedem Betriebszustand zurückhalten kann.

17. Vorrichtung nach einem der Ansprüche 11 bis 16, **dadurch gekennzeichnet, dass** an dem Rührwerk (29) Rührwerksarme (22) und Verschleißschutzelemente (26) angeordnet sind.

18. Vorrichtung nach einem der Ansprüche 11 bis 17, **dadurch gekennzeichnet, dass** in mindestens einer Zone (15, 16, 17) Mittel zum Aufbrechen von Verklumpungen und/oder Anbackungen (80) von Abfällen (12) angeordnet sind.

19. Vorrichtung nach einem der Ansprüche 11 bis 18, **dadurch gekennzeichnet, dass** die Mittel zur Zufuhr von Wasser (30 bis 35) als Öffnungen in der Decke (30, 32, 34) des Behälters (10) ausgeführt sind.

20. Vorrichtung nach Anspruch 18, **dadurch gekennzeichnet, dass** die Mittel zur Zufuhr von Wasser (30 bis 35) im Bereich der Rührwerksarme (22) und/oder sofern vorhanden im Bereich der Mittel zum Aufbrechen von Verklumpungen und/oder Anbackungen (80) angeordnet sind.

21. Vorrichtung nach einem der Ansprüche 11 bis 20, weiter umfassend Mittel zur optischen Überwachung des Innenraumes des Behälters (10), insbesondere eine Kamera (84).

## Claims

1. Method for treating waste (12) in a mechanical or mechanical-biological waste treatment plant (1), comprising the following steps of:
a) introducing waste (12) into a container (10) of a waste treatment plant (1) at at least one input point (40, 42, 44),
b) homogenizing the waste (12) by way of at least one agitator (29) which extends along the entire length of the container (10),
c) determining the consistency of the waste (12) in the waste treatment plant (1),
d) adding water or waste which has a higher water content than the waste (12) in the waste treatment plant (1) if the water content of the waste (12) in the waste treatment plant (1) is below a desired water content, or removal of water or addition of waste having a lower water content if the water content of the waste (12) is above the desired water content,
e) transporting the introduced waste (12) to at least one output point (64),
f) removing the waste,
**characterized in that** the container (10) of the waste treatment plant (1) is subdivided into at least two zones (15, 16, 17), the waste (12) passes successively through each zone (15, 16, 17) between the input point (40, 42, 44) and the output point (64), and in each zone (15, 16, 17) the consistency of the waste (12) is regulated and set separately by the input of waste and/or addition or removal of water, and wherein the treatment duration of the introduced waste is set by selecting one input point from a plurality of input points (40, 42, 44) and introducing the waste at the selected input point (40, 42, 44), wherein, for waste that requires a short treatment duration, an input point (44) located close to the output point (64) is selected.

2. Method according to Claim 1, **characterized in that** air and/or an inert gas is fed to and waste air is removed from an air space (56) above a filling level (14) of the waste (12).

3. Method according to Claim 1 or 2, **characterized in that** clumps and/or caking of waste (12) that occur during the homogenization in accordance with step b) are broken up by agitator arms (22) of the agitator (29) and/or means for breaking up incidences of clumping and/or caking (80) of waste (12) .

4. Method according to Claim 3, wherein the water is fed to the treated waste (12) in the regions in which the waste (12) is loosened by the agitator arms (22) of the agitator (29) and/or the means for breaking up clumps and/or caking (80) of waste (12) .

5. Method according to one of the preceding claims, **characterized in that** the introduced waste (12) is intermixed by the agitator (29) in accordance with step b).

6. Method according to one of the preceding claims, **characterized in that** the introduced waste (12) is selectively comminuted by the agitator (29) in accordance with step b), wherein soft biological materials are comminuted and hard materials pass through the waste treatment plant (1) without being comminuted.

7. Method according to one of the preceding claims, **characterized in that** the waste (12) is transported by equalization of the filling level.

8. Method according to Claim 7, **characterized in that** the movement of the at least one agitator (29) supports the transport of the introduced waste (12), wherein the direction of flow (13) of the waste (12) is not dependent on the direction of rotation (28) of the at least one agitator (29).

9. Method according to one of the preceding claims, **characterized in that** the consistency of the waste (12) in the waste treatment plant (1) is determined via the power requirement of the at least one agitator (29).

10. Method according to one of the preceding claims, **characterized in that** the consistency of the waste (12) is determined optically, in particular via a camera (84).

11. Device for the mechanical or mechanical-biological treatment of waste (12) by a method according to one of Claims 1 to 10, comprising a cylindrical horizontal container (10), a plurality of input points (40, 42, 44), at least one output point (64) at one end of the container (10) and at least one horizontal agitator (29) which extends along the entire length of the container (10), **characterized in that** the container (10) is subdivided into at least two zones (15, 16, 17), wherein each zone (15, 16, 17) has means for feeding water (30 to 35), a plurality of zones (15, 16, 17) are provided with an input point (40, 42, 44), and means for removing water (79) are arranged in at least one zone (15, 16, 17), a different water content of the waste (12) is settable in each zone (15, 16, 17) and the device is set up to transport waste (12) from an input point (40, 42, 44) to the output point (64) through the respective zones (15, 16, 17) located in between, wherein the device is furthermore set up to set a treatment duration of the introduced waste by selecting one input point from the plurality of input points (40, 42, 44) and introducing the waste at the selected input point (40, 42, 44), wherein, for waste that requires a short treatment duration, an input point (44) located close to the output point (64) is selected.

12. Device according to Claim 11, further comprising means for feeding air (50) and/or an inert gas and also means for removing waste air (54).

13. Device according to Claim 11 or 12, **characterized in that** a closure (41, 43, 45) for closing the input point (40, 42, 44) is arranged at at least one input point (40, 42, 44).

14. Device according to Claim 13, wherein at least one closure (41, 43, 45) for closing an input point (40, 42, 44) has means for feeding air (50) and/or an inert gas.

15. Device according to one of Claims 11 to 14, **characterized in that** the means for removing water (79) are configured as shafts in the bottom (70, 73), wherein slides (72, 75) for closing the shafts (70, 73) are arranged on the shafts (70, 73).

16. Device according to one of Claims 11 to 15, **characterized in that** a pressure-resistant slide (66) is arranged at the at least one output point (64), wherein the pressure resistance is rated such that the slide (66) can retain the waste (12) located in the container (10) in each operating state.

17. Device according to one of Claims 11 to 16, **characterized in that** agitator arms (22) and wear-protection elements (26) are arranged on the agitator (29).

18. Device according to one of Claims 11 to 17, **characterized in that** means for breaking up clumps and/or caking (80) of waste (12) are arranged in at least one zone (15, 16, 17).

19. Device according to one of Claims 11 to 18, **characterized in that** the means for feeding water (30 to 35) are configured as openings in the top (30, 32, 34) of the container (10).

20. Device according to Claim 18, **characterized in that** the means for feeding water (30 to 35) are arranged in the region of the agitator arms (22) and/or, if present, in the region of the means for breaking up clumps and/or caking (80).

21. Device according to one of Claims 11 to 20, further comprising means for optically monitoring the interior of the container (10), in particular a camera (84).

## Revendications

1. Procédé de traitement de déchets (12) dans une installation de traitement mécanique ou mécanique-biologique de déchets (1), comportant les étapes suivantes :
a) introduction de déchets (12) dans un récipient (10) d'une installation de traitement de déchets (1) au niveau d'au moins un point d'entrée (40, 42, 44),
b) homogénéisation des déchets (12) au moyen d'au moins un agitateur (29), lequel s'étend sur toute la longueur du récipient (10),
c) détermination de la consistance des déchets (12) dans l'installation de traitement de déchets (1),
d) addition d'eau ou de déchets qui présentent une plus grande teneur en eau que les déchets (12) dans l'installation de traitement de déchets (1) lorsque la teneur en eau des déchets (12) dans l'installation de traitement de déchets (1) est inférieure à une teneur en eau visée, ou retrait d'eau ou addition de déchets présentant une teneur en eau plus faible lorsque la teneur en eau des déchets (12) est supérieure à la teneur en eau visée,
e) transport des déchets introduits (12) jusqu'à au moins un point de sortie (64),
f) retrait des déchets,
**caractérisé en ce que** le récipient (10) de l'installation de traitement de déchets (1) est divisé en au moins deux zones (15, 16, 17), les déchets (12) traversent successivement chaque zone (15, 16, 17) entre le point d'entrée (40, 42, 44) et le point de sortie (64) et, dans chaque zone (15, 16, 17), la consistance des déchets (12) est régulée et réglée séparément par l'entrée de déchets et/ou l'addition ou le retrait d'eau, et la durée de traitement des déchets introduits étant réglée par la sélection d'un point d'entrée parmi plusieurs points d'entrée (40, 42, 44) et l'introduction des déchets au niveau du point d'entrée (40, 42, 44) sélectionné, un point d'entrée (44) situé près du point de sortie (64) étant sélectionné pour les déchets qui requièrent une durée de traitement courte.

2. Procédé selon la revendication 1, **caractérisé en ce que** de l'air et/ou un gaz inerte sont acheminés jusqu'à un espace d'air (56) au-dessus d'un niveau de remplissage (14) des déchets (12) et l'air d'évacuation est retiré de cet espace d'air.

3. Procédé selon la revendication 1 ou 2, **caractérisé en ce que** des agglutinations et/ou des dépôts adhérents de déchets (12) se produisant pendant l'homogénéisation selon l'étape b) sont brisés par des bras (22) de l'agitateur (29) et/ou des moyens permettant de briser des agglutinations et/ou des dépôts adhérents (80) de déchets (12).

4. Procédé selon la revendication 3, dans lequel l'eau est acheminée jusqu'aux déchets traités (12) dans les régions dans lesquelles les déchets (12) ont été désagrégés par les bras (22) de l'agitateur (29) et/ou des moyens permettant de briser des agglutinations et/ou des dépôts adhérents (80) de déchets (12).

5. Procédé selon l'une des revendications précédentes, **caractérisé en ce que** les déchets introduits (12) sont mélangés au moyen de l'agitateur (29) selon l'étape b).

6. Procédé selon l'une des revendications précédentes, **caractérisé en ce que** les déchets introduits (12) sont broyés sélectivement au moyen de l'agitateur (29) selon l'étape b), les matières biologiques molles étant broyées et les matières dures traversant l'installation de traitement de déchets (1) sans être broyées.

7. Procédé selon l'une des revendications précédentes, **caractérisé en ce que** le transport des déchets (12) s'effectue par compensation du niveau de remplissage.

8. Procédé selon la revendication 7, **caractérisé en ce que** le déplacement dudit au moins un agitateur (29) favorise le transport des déchets introduits (12), le sens de flux (13) des déchets (12) ne dépendant pas du sens de rotation (28) dudit au moins un agitateur (29).

9. Procédé selon l'une des revendications précédentes, **caractérisé en ce que** la détermination de la consistance des déchets (12) dans l'installation de traitement de déchets (1) s'effectue par le biais des besoins en force dudit au moins un agitateur (29).

10. Procédé selon l'une des revendications précédentes, **caractérisé en ce que** la détermination de la consistance des déchets (12) s'effectue optiquement, en particulier par le biais d'une caméra (84).

11. Dispositif de traitement mécanique ou mécanique-biologique de déchets (12) conformément à un procédé selon l'une des revendications 1 à 10, le dispositif comportant un récipient (10) horizontal cylindrique, plusieurs points d'entrée (40, 42, 44), au moins un point de sortie (64) à une extrémité du récipient (10) et au moins un agitateur (29) horizontal, lequel s'étend sur toute la longueur du récipient (10), **caractérisé en ce que** le récipient (10) est divisé en au moins deux zones (15, 16, 17), chaque zone (15, 16, 17) comprenant des moyens d'acheminement d'eau (30 à 35), plusieurs zones (15, 16, 17) étant dotées d'un point d'entrée (40, 42, 44) et des moyens de retrait d'eau (79) étant disposés dans au moins une zone (15, 16, 17), une autre teneur en eau des déchets (12) étant réglable dans chaque zone (15, 16, 17), et le dispositif étant conçu pour transporter les déchets (12) d'un point d'entrée (40, 42, 44) au point de sortie (64) à travers les zones (15, 16, 17) intermédiaires respectives, le dispositif étant en outre conçu pour régler une durée de traitement des déchets introduits par la sélection d'un point d'entrée parmi les plusieurs points d'entrée (40, 42, 44) et l'introduction des déchets au niveau du point d'entrée (40, 42, 44) sélectionné, un point d'entrée (44) situé près du point de sortie (64) étant sélectionné pour les déchets qui requièrent une durée de traitement courte.

12. Dispositif selon la revendication 11, comportant en outre des moyens d'acheminement d'air (50) et/ou d'un gaz inerte ainsi que des moyens de retrait d'air d'évacuation (54).

13. Dispositif selon la revendication 11 ou 12, **caractérisé en ce qu'**une fermeture (41, 43, 45) servant à fermer le point d'entrée (40, 42, 44) est disposée au niveau de l'au moins un point d'entrée (40, 42,44).

14. Dispositif selon la revendication 13, dans lequel au moins une fermeture (41, 43, 45) servant à fermer un point d'entrée (40, 42, 44) comprend des moyens d'acheminement d'air (50) et/ou d'un gaz inerte.

15. Dispositif selon l'une des revendications 11 à 14, **caractérisé en ce que** les moyens de retrait d'eau (79) sont réalisés sous forme de conduits dans le fond (70, 73), des tiroirs (72, 75) servant à fermer les conduits (70, 73) étant disposés au niveau des conduits (70, 73) .

16. Dispositif selon l'une des revendications 11 à 15, **caractérisé en ce qu'**un tiroir (66) résistant à la pression est disposé au niveau dudit au moins un point de sortie (64), la résistance à la pression étant calculée de telle sorte que le tiroir (66) peut retenir les déchets (12) se trouvant dans le récipient (10) dans chaque état de fonctionnement.

17. Dispositif selon l'une des revendications 11 à 16, **caractérisé en ce que** des bras d'agitateur (22) et des éléments de protection contre l'usure (26) sont disposés sur l'agitateur (29).

18. Dispositif selon l'une des revendications 11 à 17, **caractérisé en ce que** des moyens permettant de briser des agglutinations et/ou des dépôts adhérents (80) de déchets (12) sont disposés dans au moins une zone (15, 16, 17).

19. Dispositif selon l'une des revendications 11 à 18, **caractérisé en ce que** les moyens d'acheminement d'eau (30 à 35) sont réalisés sous forme d'ouvertures dans la partie supérieure (30, 32, 34) du récipient (10).

20. Dispositif selon la revendication 18, **caractérisé en ce que** les moyens d'acheminement d'eau (30 à 35) sont disposés dans la région des bras d'agitateur (22) et/ou, s'ils sont présents, dans la région des moyens permettant de briser des agglutinations et/ou des dépôts adhérents (80).

21. Dispositif selon l'une des revendications 11 à 20, comportant en outre des moyens de surveillance optique de l'espace intérieur du récipient (10), en particulier une caméra (84).
